# EUROPEAN PATENT APPLICATION

(11) **EP 4 197 687 A1**
(43) Date of publication of application: **21.06.2023**
(21) Application number: 21215972.7
(22) Date of filing: 20.12.2021
(51) Int. Cl.: B23K 26/352

(54) **LASER ABLATION METHOD FOR ENGRAVING A TEXTURE ON A PHYSICAL OBJECT**

(71) Applicant: GF Machining Solutions SA, 1217 Meyrin 1 (CH)
(72) Inventor: Conseil, David, 74160 Collonges-sous-Salève (FR); Langel, Philippe, 01710 Thoiry (FR)
(74) Representative: Li Schrag, Yue

(57) **Abstract**

The present invention is related to a method for engraving a texture on a physical object by a laser beam emitted by a laser head through a galvanometer integrated in a machine tool, in particular a 5-axis laser machine tool comprises the following steps:
providing an image representing the texture, wherein the image includes a plurality of pixels;
defining a plurality of groups of the pixels in accordance with at least one characteristic of the pixels,
assigning to each group of the pixels a set of machining parameters;
emitting the laser beam on the physical object to engrave the texture on the surface of the object, wherein the set of machining parameter is applied to engrave the corresponding group of pixels on the physical object.

## Description

### FIELD OF THE INVENTION

The present invention is related to a laser ablation method for engraving a texture on a physical object. In further, the present invention is related to a machine tool for engraving the texture on the physical object.

### BACKGROUND OF THE INVENTION

Laser ablation methods are widely used for engraving a texture on the surface of a physical object by sublimating the material on the surface of the object. The principle used to produce the desired structure, or texture, on the surface of the object is described for instance in the document DE 42 09 933 A1. The process can be seen as "inverted stereolithography": instead of raising the coats for building, the material is sublimated layer by layer by the laser machining as described for instance as well in the further publications, the EP 1189724 A0 and WO 0074891 A1.

Machine tools for machining the objects by laser ablation are well known as well. The European patent application EP 2 301 706 A2 describes for instance a possible technical design of such an apparatus. The machine tool comprises an object holder to mount a three-dimensional solid object to be machined thereon and a laser head for emitting the laser beam on the object to remove material. Several machine configurations are imaginable. For instance, the object-holder or the laser head, which is linear movable in three, axes (Cartesian X, Y, Z system). Preferably, allowing a higher accuracy and flexibility, the object-holder or the laser head are in addition able to rotate with high precision around two rotational axes.

Once the laser head of the machine tool is positioned at a defined position, the laser beam can be moved within a limited range. The movement of the laser beam can be realized in different ways using different optical setup. One known example is to mount in the machine head a galvanometer, which can direct the laser beam in a large range of direction.

The laser ablation machining occurs in a multiplicity of process steps, in which the surface structure is machined layer wise. The realization of a two or three-dimensional texture on the surface of the object requires to work with many layers and to split the surface of every layer into several patches depending on the curvature of the object. The patch is a defined machining area on the object and during the machining of this area, the machine head stays at one position and only the laser beams moves in this area. Usually the patches do not exceed the size of e.g. 175 x 175 mm. Machining the object in layers is due to the simple fact, that a laser beam is just able to ablate a surface down to a limited thickness. In fact, the laser is able to take away 1 to 5 µm of thickness of the material in one passage. The texturing resp. engraving by laser ablation of a typical metallic object requests usually a working in 20 to 100 passages (resp. layers) on the surface of the object.

A complete texturing machining of the surface of the object consists in ablating a plurality machining layers, with, for each layer, a set of positions that the machining head must reach, so as to machine a patch for each position for the layer concerned. The software always considers the actual and real three-dimensional shape of the object surface and the texture to be applied thereto. Naturally, the computation of the laser head positions and of the patches machined requires enormous computer resources: several hours or even several days depending on the complexity and on the dimensions of the part, on the type of algorithm used, on the number of machining layers, etc.

Thus, before the machining, a machining file including machining data must be generated based on the geometry of the object and the texture to be engraved thereon. A control unit of the machine tool can read the machining file to control the movement of the laser beam emitted by the laser head, since the machining file defines where the material should be removed. Generally, the machining file is prepared out of the machine tool and loaded into the machine tool when the machining job starts. However, it is not excluded to generate the machining file in the machine tool. The generated machining file essentially consists of a machining toolpath, which comprises a succession of positions that the laser machining head must occupy in relation to the object, and, for each position, a succession of ablation operations corresponding to the scanning that the laser beam must perform from this position. This result directly influences both the machining time and the finishing quality of the texturing.

Preparation of the machining file includes modeling the geometry of the object and analyzing image file defining the texture. The machining file must be generated by considering the texture, respectively the image and the geometry of the object. Thus, the object is normally modelled numerically by a meshing of usually triangles to generate a 3-D modelling file, for example, the object-geometry data is a mesh file.

The textures defined by the image files are additionally applied respectively processed by the software to the mesh file of the modeled 3D-surface of the object. The grey level image representing a three-dimensional texture is composed by a multiplicity of individual pixels, whereby the depth of a position in the texture is defined as a corresponding grey level of the corresponding pixel. The lighter a pixel, the less deep is the texture at that specific point. The darker the pixel, the deeper is the texture at that specific position. Preferably, the amount of grey levels corresponds to the amount of applied layers. By that, the grey level image defines for each layer if a specific point needs to be ablated or not during the machining of that layer. If a pixel on the grey level image is equal or darker than the grey level of the specific processed layer, then the corresponding point needs to be ablated. If a pixel in the grey level image is lighter than the grey level of that specific layer, then the corresponding point must not to be ablated. A white pixel or area represents consequently a point or area of the texture surface with no deepness. This means, the point of texture corresponds at that position to the unmachined surface and no laser ablation has to occur there.

Besides the machining file, setting machining parameters is a further essential step for the machining. Until now, same parameter is set for the same area and same machining type, such as engraving and finishing, because the machining file includes only the information if a defined position on the surface of the object should be ablated or not.

In the known method, in order to achieve a 3-D effect, it is often required to ablate a deep depth. Thus, many layers has to be machined and the machining time needed is long.

### SUMMARY OF THE INVENTION

It is an objective of this invention to provide a laser ablation method to overcome the drawbacks of the known method. It is an objective of this invention to increase the machining flexibility. It is a further objective of this invention to optimize the machining efficiency. In particular, it is an objective of the invention to provide a laser ablation method with optimized machining parameters.

According to the present invention, these objectives are achieved through the features of independent claims. In addition, further advantageous embodiments follow from the dependent claims and the description.

The present invention relates to a method for engraving a texture on a physical object by a laser beam emitted by a laser head through a galvanometer integrated in a machine tool. In particular, the machine tool is a 5-axis laser machine tool. An image representing the texture is provided. The image is composed of a plurality of pixels. A plurality of groups of the pixels are defined in accordance with at least one characteristic of the pixels. To each group a set of machining parameter is assigned. The laser beam is emitted on the physical object to engrave the texture on the surface of the object, wherein the set of machining parameter is applied to engrave the corresponding group of the pixels on the physical object. By this way, the machining parameters can be tailored in accordance with not only different textures but also individual groups of pixels. The number of pixels belong to one group is not limited. If only one pixel features a specific characteristic, it is possible that one group includes solely this pixel, thereby the method of the present invention enables to adjust the machining parameters for this single pixel. However, the machining parameters are not randomly set to the groups but determined in dependence on the characteristic of pixels. This can enhance the flexibility of the machining, because the machining of one texture is not bound to one set of machining parameters. An increased variety of optical appearance of the machining surface can be achieved. In further, more possibilities can be provided to machine a designed optical appearance or functional surfaces.

In the known method, the machining parameters are set once for engraving one texture. For some applications, the engraving of the texture is supplemented by another machining type, namely finishing. The machining parameters set for engraving can be changed for conducting the finishing. However, during the engraving or during the finishing the set machining parameters remain unchanged. Contrary to the known method, in the present invention the machining parameters can vary during the same machining type, because the machining parameters are associated with the characteristic of the individual pixel. The characteristic of the pixel is used as the criterial to define the groups. All the pixels having the same characteristic are machined by applying the same set of machining parameters.

In the present invention, at least two groups of pixels are determined and for each group a set of machining parameters is assigned, preferably, the two sets of machining parameters differ from each other. Hence, at least two different sets of machining parameters are utilized for machining, in particular for at least one of the machining types such as engraving and finishing.

The same image can be engraved several times on different locations of the surface of the object. However, on one surface different images can be engraved thereon. One image is defined by one image file, in particular one image is defined by one single image file. If two or more images are engraved on the same surface, the pixels belong to the same image are divided into a plurality of groups. The method of the present invention is applied for each of the image. Thus, for engraving each of the image the machining parameters must be adapted at least once, since for each image at least two groups are defined and at least two set of machining parameters are applied.

In general, the texture is described by the image, which can be a grey-level image or a color image. Each pixel is defined by its positional information and the color information. In one preferred embodiment, the grey-level image is selected to represent the texture. In the known method, the grey-level information of the pixel is employed to represent the depth of the texture, for example to define the layers to be machined to obtain the depth of the ablation. In the present invention, the grey-level information of the pixels is extracted to adapt the machining parameters. To achieve this, the image is divided into the plurality of groups in accordance with the grey-level of the pixels. Each group includes the pixels of the image having at least one specific grey-level or a range of grey-levels. The grey-level image is normally composed of the pixels with 8 bits or 16 bits, therefore the grey-level image can have maximum 256 grey-levels and 65536 grey-levels, respectively. Accordingly, the 8-bits image can be divided into maximum 256 groups. To each group, a set of machining parameters is assigned. In total, 256 sets of machining parameters can be defined for machining the texture represented by this image.

Depending on the applications, the group can include the pixels having only one specific grey-level or several specific grey-levels. To achieve the highest machining flexibility, all pixels included in one group has the one same grey-level. In this event, the machining speed can be effected, because a large number of machining parameters must be changed during the machining. Thus, in some applications, it is preferred to define less groups of pixel than the maximum possible number of groups to optimize the machining sufficiency by reducing the time needed to change the machining parameters.

In another preferred variant, the pixels having a same range of grey-levels are assorted into one group. For example, a 8-bit image is divided into four groups. The first group includes the pixels having grey-levels in the range of 0-63, the second group includes the pixels having grey-levels in the range of 64-127, the third group includes the pixels having grey-levels in the range of 128-191, and the fourth group includes the pixels having grey-levels in the range of 192-255. However, the grey-levels must not be sorted in a determined order or uniformly. Thus, the four groups explained in the previous example can be defined differently. The first group includes the pixels having grey-levels 1, 3, 31, 100, the second group includes the pixels having grey-levels 2, 20, 41, 99, 205, 233, the third group includes the pixels having grey-levels 120, 121, the fourth group includes the pixels having the grey-levels not included in the first three groups. It can be seen that the order of grey-levels in one group must not be continuous and the number of grey-levels in one group can also vary. It depends on the design requirement, in particular the optical appearance of the surface of the object to be obtained by the machining. Moreover, different functional surfaces can be obtained.

In a further embodiment, the texture is represented by a color image, such as CMYK or RGB. The CMYK images have four channels of cyan, magenta, yellow and back. The RGB image is composed of three channels, red, green, and blue. In one preferred variant, the color image RGBA is applied. This kind of image includes besides the three basic color channels the Alpha channel. When the color image is provided to represent the texture, the groups are defined based on the color information of the pixel. When a 32 bit or 64 bits RGBA image is used, the maximum number of group is accounted for 4 294 967 295 and 18 446 744 073 709 552 000, respectively. Consequently, for engraving this image on the object, a large amount of sets of machining parameters can be selected and deployed to control the laser machining to engrave the image on the object. It is considerable that the pixels defined in one group includes not one single color but a range of colors as explained in the previous embodiment of using grey-level image.

In the known method, the laser texturing parameters are selected for different machining types e.g. engraving and finishing, thus, the machining parameters are set independent on the characteristic of the pixel such as grey-level or color scale. The method of the present invention enables to adapt locally the laser machining parameters by coupling this information with one of the characteristic of the pixel such as color information.

In the known method, a dark pixel on the grey-level image indicates a larger ablating depth than a light pixel, which is achieved by ablating this pixel in more layers than a lighter pixel, but the machining parameters remain the same for the dark pixel and the light pixel during engraving or finishing. In the present invention, the dark pixel can be ablated by using another set of machining parameters than the light pixel, as the machining parameters applied for the pixels are determined in dependency on the grey-level of the pixel. The depth of the material removed for dark pixel and light pixel can maintain the same, but machining parameters applied to ablate these pixels can differ. This leads to fast machining, since less material must be removed by the laser beam. Additionally, turning the machining parameters for individual group can generate additional optical effect. For example, the drawback of machining less ablation depth can be compensated and a visual 3-D effect can be obtained due to different glossy effects generated by applying different machining parameters.

For example in the know methods, in order to achieve a desired contrast, 100 machining layers maybe necessary, since the ablating different depth results in the contrast. The method of the present invention provides the possibility to achieve the similar contrast by machining much less layers, e.g. machining only half number of the standard machining layers, namely 50 layers using known method and an additional layer, e.g. the last year using the method of the present invention. For machining the last layer, the grey-levels of the pixel are used to define the plurality of groups to apply different sets of machining parameters for different groups. Applying the machining parameters selectively results in optical effect such as contrast, sheen and thereby the accentuated 3-D effect of the machined texture can be obtained. The texture machined with 51 layers shows the similar deepness as the texture machined by 100 layers. Machining less layers saves the machining time and therefore increases the machining sufficiency.

It is also possible to define the groups based on the positional information of the pixel. Moreover, it is considerable to define the groups based on the positional information of the pixel and the color information of the pixel. For example, subgroups within one group can be defined. The groups are defined based on the color information and the subgroups are defined based on the positional information or in a reversed order.

In further, the machining parameters to be applied for machining different groups can vary in types and/or values. For example, to two groups different types of machining parameters or with the same type of machining parameters but different values can be assigned. For example, a first set of machining parameter and a second set of machining parameter are assigned to the first group and the second group, respectively. In one variant, these two sets of machining parameter include the same type of parameters, e.g. laser power, number of impact, laser source. However, the value of these two set of machining parameters differ from each other. In another variant, the first set of machining parameter includes different types of machining parameter than the second set of machining parameter. The first set of machining parameter includes e.g. laser power, number of impact and laser source, while the second set of machining parameter includes e.g. laser shaping parameter, laser source and hatching distance.

Each set of machining parameters can include one or more of the machining parameters.

For laser ablation, many machining parameters play an essential role. They can be one or more of the following: laser source, laser impact density, laser impact overlapping, hatching distance, laser spot size, laser beam shaping parameters such as top hat or Gaussian, laser beam polarization parameter, laser wavelength, laser power, laser pulse repetition rate, laser pulse duration and laser burst mode parameters.

In the laser machine tool, it is possible to integrate more than one laser source. During the machining, a laser source applied for ablating one group can be switched off and another laser source can be switched on to ablate another group. The laser sources can have different types of laser, e.g. femtosecond laser, picosecond laser. The laser sources can emit laser pulses with different intensity, e.g. 20 W to 1000 W.

Laser impact overlapping is normally used in the vector based machining path and well known.

The laser impact density and the number of laser impact are typically used in the blasting. The laser impact density defines the number of positions per area, e.g. 300 per mm². One position is called one "dot" in random dots application. This position is reached by moving the galvanometer.

The number of laser impact defines the number of laser impacts for one position. Basically, using blasting, the laser shoots a certain number of pulses for one position, namely at the same place of the galvanometer and then move to another position and shoot a certain number of impacts.

Hatching distance is typically used in the vector-like machining path. It defines the distance between the vectors.

Laser spot size defines the radius of the laser beam emitted on the surface of the object.

Laser beam shape is typically defined by its irradiance distribution. For example, for a Gaussian beam profile, irradiance decreases with increasing distance from the center according to a Gaussian equation. For a top hat beam, irradiance is constant over a given area, and can gives different roughness and sheen compared to a Gaussian beam.

Laser polarization means where the electric field oscillates in a certain direction perpendicular to the propagation direction of the laser beam, such as, horizontal linear polarization, vertical linear polarization, left circular polarization and right circular polarization. Laser wavelength can vary from Infrared (1030 &1064 nm), green (515 & 532nm) and blue-violet (340 & 355nm) lasers.

Laser repetition rate defines the number of pulses emitted per second.

A burst mode laser consists of a relatively short sequence of high intensity pulses, the burst lasting on the order of milliseconds, with a longer (a few seconds) recovery time in between bursts.

Additionally, the method of the present invention can be combined with the known engraving machining path, such as vector-liked, blasting described in EP2647464, hatching with parallel vectors, 2-D or 3-D laser toolpath, and wobbling toolpath.

The hatching with parallel vectors means that during processing the object surface, the laser beam always moves along the predefined parallel laser vectors. To produce a texture respectively a relief on the surface, the laser pulses are switched off whenever the sublimation of material is not requested. This is the known and commonly used method for the texturing for example a predefined patch on the object. Thus, the area to be ablated within a patch is defined by a plurality of laser vectors and each laser vector has two ends to define the start position of the laser vector and the end position of the laser vector. EP3047932 B1 and EP3421168 describes the details of such machining path.

A blasting is ablate the material dot by dot. The object is ablated pointwise by emitting one or more series of laser beam pulses from the laser head to produce therewith individual machining dots on the surface of the object. EP 2 647 464 describes the details of such ablating method. In one variant, the engraving is conducted in a group-by-group manner, in which all pixels of a first group are machined and then all pixels of a second group are machined, in particular engraving the pixels of at least one group is conducted by repositioning at least once the laser head.

In another variant, the surface of the object can be divided into a plurality of patches and the engraving is conducted in a patch-by-patch manner, in particular, at least for one patch the machining parameters must be adapted in accordance to the assigned set of machining parameter to the corresponding groups.

In known methods, the engraving are usually conducted layer by layer and patch by patch as disclosed for example in EP3047932 This standard machining sequence is still suitable for the method of present invention. However, the number of layers required can be reduced dramatically, preferably less than 50, in particular less 10, preferred from one to three layers. The method of the present invention extends the options of machining sequences, since additional machining sequences become possible. A new machining sequence is defined as group-by-group. Thus, the engraving can be conducted additionally in a group-by-group manner and/or the combination of patch-by-patch and group-by-group.

In the known method, the machining speed mainly depends on the mechanical movement of the laser head, thus the optimization of machining speed focus on the generation of patch and the machining layer. In the present invention, the time required to change the machining parameters must also be considered to evaluate the machining speed. Therefore, the sum of both factors of mechanical movement of the laser head and the time required to change the machining parameter gives the total machining time. Consequently, optimizing the machining sequence has a direct positive impact on the optimization of machining speed. To achieve this goal, the machining sequence should be carefully selected. It depends on the time required to change machining parameters for different groups and the time required to move the machine head, namely time required to change the machining position from one patch to another patch. In further, the pattern of the texture respectively the image and the type of the machining parameters have also a direct impact on the determining the machining sequence. If changing the machining parameters of the different group is time-consuming, the engraving is preferably conducted by patch-by-patch. If each patch includes different groups, it is preferred to conduct the engraving group-by-group. In most of cases, within at least one patch pixels belongs to at least two different groups must be engraved. In the manner of patch-by-patch, the machining parameters must be changed during the machining of one patch. If within one patch pixels of for example three groups must be engraved, then the machining parameters must be switched between three sets of machining parameters. This requires at least three times of changing machining parameters. However, the machine head stays in the same position during the machining of the whole patch, thus the time for mechanical movement the laser head is kept low. The new sequence group-by-group means that the pixels belong to the same groups are machined in one go without changing machining parameters. Logically, the machine head has to be repositioned many times because the pixels of one group is in most of applications spread in different patches. In this case, more time is required for the mechanical movement of the laser head to switch between patches, but the time for changing machining parameters can be reduced.

In one variant, the geometry data of the object is inquired and the image is mapped on the object to calculate the machining path and the set of machining parameters.

In further, the machining path is vector-like or blasting.

Moreover, the present invention is related to a data-processing unit for generating machining data for laser engraving. The data-processing unit is configured to receive an image representing the texture, wherein the image includes a plurality of pixels; define a plurality of groups of the pixels in accordance with at least one characteristic of the pixels; and assign to each group of the pixels a set of machining parameters; and generate machining data including the machining parameters. The data-processing unit is further configured to conduct of the other steps of the method of the present invention.

Additionally, the present invention is related to a machine tool for engraving a texture on a physical object by a laser beam emitted by a laser head integrated in the machine tool. The machine tool comprises a control unit configured to receive the generated machining data from the data-processing unit and control the machine tool to emit the laser beam on the physical object to engrave the texture on the surface of the object, wherein the set of machining parameter is applied to engrave the corresponding group of pixels on the physical object. The machining parameters can be automatically changed during the engraving of one image since this information is coupled with the image file, in particular with the pixel characteristic, e.g. the color information. It is not necessary to interrupt the engraving process to change the machining parameters for engraving different groups of the pixels. It is not necessary to manually change the machining parameters during engraving one image.

In a preferred variant, the data-processing unit is located at the outside of the machine tool since a large computation power is required to generate the machining data. The generated machining data can be transferred into the machine tool through any communications methods or directly by a data carrier. However, it is not excluded the possibility of integrating the data-processing unit in the machine tool.

### BRIEF DESCRIPTION OF THE DRAWINGS

A more particular description of the principles briefly described above will be rendered in the following by reference to specific embodiments thereof, which are illustrated in the drawings. These drawings illustrate exemplary embodiments of the disclosure and are not therefore to be considered to limit its scope. The principles of the disclosure are described and explained with details through the use of the accompanying drawings in which:
- Fig. 1, Fig 2:: Illustrates a machine tool for laser ablation and a laser head thereof;
- Fig. 3:: illustrates one example of 3-D modeling file;
- Fig. 4:: illustrates one example of a plurality of pixels of a grey-level image;
- Fig. 5, Fig. 6:: illustrate one example of grey-level images and the image mapped on the object; and
- Fig. 7, Fig. 8:: illustrate another example of grey-level image to be applied on the object and the surface of the machined object.

### EXEMPLARY EMBODIMENTS

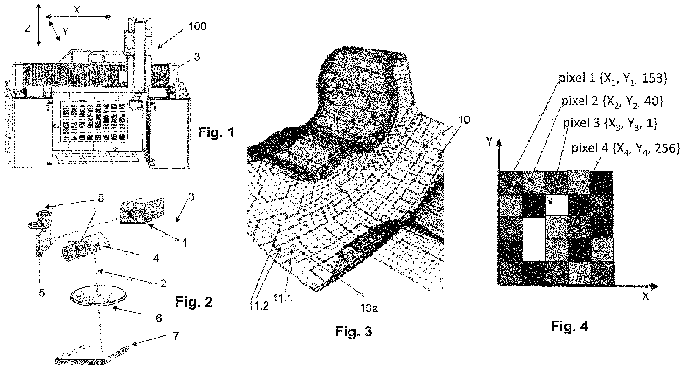

Figure 1 illustrates an example of a laser machine tool 100 for laser texturing. The machine tool includes a laser head 3 for emitting and moving the laser beam and a machine table for clamping an object thereon. The laser head 3 may be displaced in the three dimensions X, Y and Z of a Cartesian reference frame. Advantageously, the laser head is also mobile in rotation about rotation axes, not represented to obtain a greater accuracy and a greater flexibility. The laser head comprises a laser source 1 for emitting laser beam, optical devices, and a galvanometer. The laser head 3 and the object are positioned in relation to one another according to five mechanical axes, which makes it possible to orient the direction of the laser beam emitted and to position the focal point of the laser on the surface of the object.

Figure 2 depicts the operation of the galvanometer laser head. The laser source 1 emits a laser beam 2, or more specifically a pulsed laser beam. The laser beam 2 is reflected by the mirrors 4 and 5, which respectively make it possible to define, according to the axes X and Y of the Cartesian reference frame, the position of the point of projection of the laser beam on the surface of the object 7. Actuators 8 are provided to make it possible to control the angular position of the mirrors 4 and 5. After the deflection by mirrors, the laser beam passes through a lens 6 with a dynamic focusing correction, commonly called F-theta lens. This device is arranged in the laser head to define the point of impact of the laser beam with the surface of the object 7 in a plane situated in the focal range considered.

Usually, the systems used with a focal length of for example 430 millimetres make it possible, from a given position of the laser head 3, to machine, using the galvanometer, a planar surface measuring 300x300 mm, called marking field. On the other hand, when the surface of the object 7 to be machined is not planar, the focusing capacity of the lenses limits the marking field in the directions X and Y. If the curvature of the surface of the object is significant, it is then necessary to reduce the dimensions on X and Y of the marking fields for the variation on Z in each marking field. Consequently, this increases the number of different positions occupied by the laser head to carry out a texturing job, namely the number of patches generated must be increased.

Figure 3 illustrates one example of modelling 3-dimensional form of the object numerically by a meshing of usually triangular forms 11.1, 11.2 and the calculated patches 10, 10a. The thick black lines present the borderlines of different patches. Each patch consists of a plurality of mesh triangles presented by the thinner black lines. The borderline of patches run along the edge of mesh triangles. Some mesh triangles are positioned at the patch junction such as the mesh triangle numbered as 11.2, some mesh tringles are not at the patch junctions, such as the mesh triangle numbered as 11.1. During the machining of one patch, the laser head stays at one position and laser beam moves within the patch either in a vector-liked manner or in a blasting manner.

Figure 4 illustrates a plurality of pixels of a grey-level image. An image is a matrix of pixels, each of which pixel has the defined positional information and the colour-information. This example shows an 8-bit grey-level image, thus the colour information is represented by the grey-scales. The references X and Y represent the position of the pixel in the coordinate system and the number in the bracket represents the grey-level. For example, the pixel 1 is positioned at the a first position (X1, Y1) and has the grey scale of 153, the pixel 2 is positioned at a second position of (X2, Y2) and has the grey scale of 40, the the pixel 3 is positioned at the a third position (X3, Y3) and has the lightest grey scale of 1, the pixel 4 is positioned at a fourth position of (X4, Y4) and has the darkest grey scale of 256.

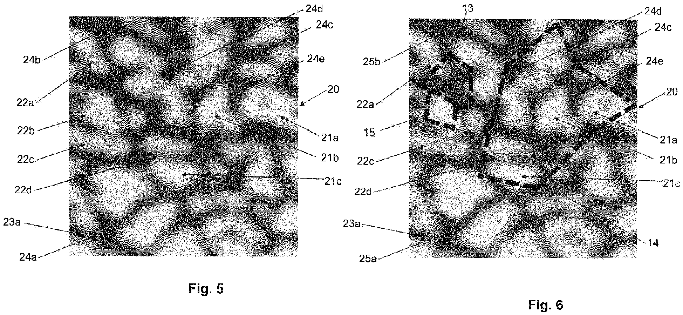

The texture to be applied respectively engraved on the object surface is typically defined as a grey level image or a colour image. Figure 5 illustrates one example of a texture represented by a grey-level image 20, which is composed of a multiplicity of pixels. In the present invention, the pixels composed in the grey-level image 20 are divided into a plurality of groups in accordance with the characteristic of the pixels, in particular the grey level of the pixels. Figure 5 illustrates a simplified example, thus only a reduced number of groups are illustrated. However, the number of groups to be determined is not limited to this number shown in figure 5 but dependent on the format of the image. In this example, four groups are shown. The first group 21a, 21b, 21c includes all pixels having a first grey level, the second group 22a, 22b, 22c, 22d includes all pixels having a second grey level, the third group 23a includes all pixels having a third grey level and the fourth group 24a, 24b, 24c, 24d, 24e includes all pixels having a fourth grey level. In the embodiment shown in figure 5, the groups are determined based on the grey-level information of the pixel and are independent on the position of the pixel, the pixels belong to the same group are not necessarily located close, respectively neighboured to each other. Therefore, one group can includes several sections, each of which includes a cluster of pixels positioning close to each other. It is also possible that one group includes only one section and/or one group or one section of a group includes only a small amount of pixels or even one pixel. The first group includes e.g. a first section 21a, a second section 21b and a third section 21c. The second group includes all pixels having a second grey level. The second group includes e.g. a first section 22a, a second section 22b, a third section 22c and a fourth section 22d. The third group includes all pixels having a third grey level. The third group includes e.g. a first section 23a. The fourth region includes all pixels having a fourth grey level. The fourth group includes e.g. a first section 24a, a second section 24b, a third section 24c and a fourth section 24e. One section of a group can partially surround one section of another group. For example, the first section of the third group 23a surrounds partially the first section of the fourth group 24a, this is determined by the image.

A first set of machining parameters P1 is assigned to the first group, a second set of machining parameters P2 is assigned to the second group, a third set of machining parameters P3 is assigned to the third group and a fourth set of machining parameters P4 is assigned to the fourth group. Each set of machining parameters includes one or more machining parameters. These four sets of machining parameters are applied for engraving the texture represented by this image, in particular, each set of machining parameter is used to ablate the surface of the object to form the corresponding pixels on the object. The first set of machining parameters P1, the second set of machining parameters P2, the third set of machining parameters P3 and the fourth set of machining parameters P4 are applied to engrave the first group of pixels, the second group of pixels, the third group of pixels and the fourth group of pixels, respectively.

Figure 6 shows further one example of mapping the grey-level image shown in the figure 5 on the object. The figure 6 shows an enlarged view of a small area of the object with the image mapped thereon, thus, the shape of the object cannot be seen in the figure 6. As explained above, the laser beam can only ablate a small area of the surface at one position of the laser head. Thus, the surface of the object must be divided into a plurality of patches and the machining is conducted normally patch-by-patch to reduce the time for mechanically move the laser head. However, in the known method, the same machining parameters are used for all patches or at least for the same patch, thus, patch-by-patch is an sufficient machining sequence. In the present invention, the machining parameters used to machine different patches can vary. In further, the machining parameters used to machine one patch can vary, since pixels belong to different groups can be located in one patch. The reason is that the groups and the patches are determined independently. As shown in the figure 6, within one patch with a boundary drawn in the broken lines, pixels having different grey-levels must be engraved. This means, one patch can contain pixels assigned to different groups. Since different set of machining parameters are assigned to pixels having different grey-levels, the machining parameters must vary during the machining time of one patch. For simplification reasons, only three patches 13, 14 and 15 are shown in this example. Each patch includes at least partially of the different groups of pixels. For example, the second patch 14 includes not only the sections of the first group, 21a, 21b 21c but also the sections of other groups such as the sections of the fourth group 24c, 24d, 24e. In order to optimize the machining sufficiency, different machining sequences can be applied. For example, the third patch 15 includes pixels from two different groups, thus this patch can be machined completely without changing the laser head position. However, during machining this patch the machining parameters must be varied for engraving the pixels from the two different groups. After the machining of this patch, the laser head is moved to another position to machine the next patch. This patch-by-patch sequence is for example also suitable for machining the first patch 13, since the machining parameters must not be changed to many times. The second patch illustrates anther situation. The pixels in this area have more grey-levels than the pixels in the first patch and the second patch. If the pixels in the second patch has to be machined in one go, the machining parameters must be changed many times, which increases the total machining time to much and reduce the machining sufficiency. It is then preferred to machine the pixels in a group-by-group order. This means, all pixels belong to the first group should be machined first and then the pixels belong to the second group should be machined, and so on. During the machining of pixels in one group, the machine head may be repositioned, since the pixels of one group maybe not in one patch. The time required for repositioning the laser head may be increased compared to the patch-by-patch sequence, but the time needed for changing the machining parameters can be reduced, hence the total machining time is still low. Certainly, it depends additionally if the time required to change machining parameters is long compared with the repositioning of the laser head. The pixels of the first group are first machined with the first set of machining parameters. After finishing the engraving of the first group of pixels, the second set machining parameters are set and the pixels of the second group of pixels are then machined with the second set of machining parameters. Logically, during machining the first group or second group the machining head has to be changed several times because the pixels of one group are spread in different patches. It is even considerable to combine the patch-by-patch sequence and the group-by-group sequence to further optimize the machining time.

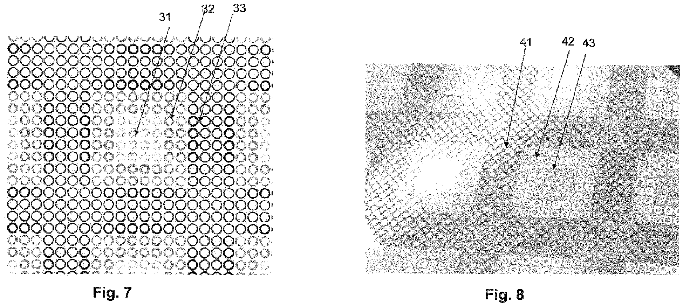

Figures 7 and 8 illustrate another example. The image representing the texture to be engraved on the object is shown in figure 7 and the machined object is shown in figure 8. The pixels of this image illustrated in figure 7 are divided into three groups. The image shown in figure 7 is one image representing one texture. The first group includes the pixels having a first grey-level, the second group includes the pixels having a second grey-level and the third group includes the pixels having a third grey level. Three set of machining parameters are assigned to these three groups. Each set of machining parameter includes several machining parameters such as: laser source, laser power, and the laser pulse duration. The same laser source is chosen and the same laser power is set for machining all groups of pixels. However, different laser pulse durations are set for machining the different groups of the pixels. The laser pulse duration of the first set of machining parameter is set to 500ns, the laser pulse duration of the second set of machining parameter is set to 350 ns, and the laser pulse duration for the third set of machining parameter is set to 120 ns. Therefore, the pixels of the first groups are engraved on the object by using a laser pulse duration of 500 ns, the pixels of the second group are engraved on the object by using a laser pulse duration of 350 ns, and the pixels of the third group are engraved on the object by using a laser pulse duration of 120ns.

As shown in figure 8, the variation of the laser pulse durations can result in different optical appearance on the machined surface. The first machined surface area 41 where the first group of pixels are engraved has the most sheen. The second machined surface area 42 where the second group of pixels are engraved has less sheen than the first surface area. The third machined surface area 43 where the third group of pixels are engraved has the least sheen.

### LIST OF REFERENCES

- 1: laser source
- 2: laser beam
- 3: laser head
- 4, 5: mirrors
- 6: lens
- 7: part
- 8: actuators9.1, 9.2 machining layers
- 10, 10a,: patch
- 11.1, 11.2: mesh triangle
- 100: laser machine tool

## Claims

1. A method for engraving a texture on a physical object by a laser beam emitted by a laser head through a galvanometer integrated in a machine tool, in particular a 5-axis laser machine tool comprising:
providing an image representing the texture, wherein the image includes a plurality of pixels;
defining a plurality of groups of the pixels in accordance with at least one characteristic of the pixels;
assigning to each group of the pixels a set of machining parameters;
emitting the laser beam on the physical object to engrave the texture on the surface of the object, wherein the set of machining parameter is applied to engrave the corresponding group of pixels on the physical object.

2. The method according to claim 1, wherein at least two groups of pixels are determined and for each group a set of machining parameters is assigned.

3. The method according to claim 1 or 2, wherein the characteristic of the pixel is the color information of the pixel.

4. The method according to one of claims 1 to 3, wherein the image is a grey-level image and the plurality of groups of the pixels are defined in accordance with the grey-level information of the pixels, in particular the pixels having the same range of grey levels are assigned into the same group, preferably the pixels having the same grey-level are assigned into the same group.

5. The method according to one of claims 1 to 3, wherein the image is a RGBA image and the plurality of groups of the pixels are defined in accordance with the color information of the pixel in particular the pixels having the same range of color scale are assigned into the same group, preferably the pixels having the same color scale are assigned into the same group.

6. The method according to one of claims 1 to 5, wherein the characteristic of the image is the positional information of the pixel.

7. The method according to one of claims 1 to 6, wherein the type of the set of machining parameters for at least two groups of the pixels are different and/or the value of the machining parameters included in the set of machining parameters for at least two groups of pixels are different.

8. The method according to one of claims 1 to 7, wherein the laser machining parameter is one or more of the following: laser source, laser impact density, number of impact, laser impact overlapping, hatching distance, laser spot size, laser beam shaping parameters such as top hat and Gaussian, laser beam polarization parameter, laser wavelength, laser power, laser pulse repetition rate, laser pulse duration and laser burst mode parameters.

9. The method according to one of claims 1 to 8, wherein the engraving is conducted in a group-by-group manner, in which all pixels of a first group are machined and then all pixels of a second group are machined, in particular engraving the pixels of at least one group is conducted by repositioning at least once the laser head.

10. The method according to one of claims 1 to 9, wherein the surface of the object can be divided into a plurality of patches and the engraving is conducted in a patch-by-patch manner, in particular at least for one patch the machining parameters must be adapted in accordance to the assigned set of machining parameter to the corresponding groups.

11. The method according to claim 9 or 10, wherein the engraving is conducted in a combination of the group-by-group manner and the patch-by-patch manner.

12. A data-processing unit for generating machining data for laser engraving is configured to
receive an image representing the texture, wherein the image includes a plurality of pixels;
define a plurality of groups of the pixels in accordance with at least one characteristic of the pixels; and
assign to each group of the pixels a set of machining parameters; and
generate machining data including the machining parameters.

13. The data-processing unit according to claim 12, wherein the data processing unit is further configured to conduct the method of according to claims 2 to 8.

14. Machine tool for engraving a texture on a physical object by a laser beam emitted by a laser head integrated in the machine tool comprising a control unit configured to receive the generated machining data from the data-processing unit and control the machine tool to emit the laser beam on the physical object to engrave the texture on the surface of the object, wherein the set of machining parameter is applied to engrave the corresponding group of pixels on the physical object.

15. A machine tool according to claim 14, wherein the control unit is further configured to conduct the method according to claims 9-11.
